# EUROPÄISCHE PATENTSCHRIFT

(11) **EP 0 685 866 B1**
(45) Veröffentlichungstag und Bekanntmachung des Hinweises auf die Patenterteilung: **01.10.1997**
(21) Anmeldenummer: 94108487.3
(22) Anmeldetag: 01.06.1994
(51) Int. Cl.: H01H 71/04, H01H 83/20

(54) **Überwachungsgerät zur Zustandserfassung bei elektromechanischen Schutzschaltern**
Monitoring device for sensing the condition of electromechanical circuit breakers
Dispositif de surveillance pour la détection d'état de disjoncteurs électromécaniques

(43) Veröffentlichungstag der Anmeldung: 06.12.1995
(73) Patentinhaber: SIEMENS AKTIENGESELLSCHAFT, 80333 München (DE)
(72) Erfinder: Finger, Hans-Georg, D-93092 Barbing (DE); Kleemeier, Manfred, D-93073 Neutraubling (DE)

(56) Entgegenhaltungen:
- EP-A- 0 473 246
- DE-U- 9 406 897
- US-A- 4 112 270
- US-A- 4 706 073
- ELEKTROTECHNISCHE ZEITSCHRIFT - ETZ, Bd.112, Nr.23, 1991, BERLIN DE Seiten 1286 - 1291 WOLFRAM FRIEDL 'Gebäudesystemtechnik-die neue Dimension der Elektroinstallation'

## Beschreibung

Die Erfindung bezieht sich auf ein Überwachungsgerät zur Zustandserfassung bei elektromechanischen Schutzschaltern mit Schaltschloß, Schaltkontakten und Auslöseeinrichtung. Es ist bekannt, den Zustand von Schutzschaltern durch Sensoren von außen zu überwachen (US-A-4 706 073).

Besonders in Bussystemen der Gebäudesystemtechnik möchte man zunehmend Schutzschaltsysteme und Einrichtungen wie Leitungsschutzschalter und Fehlerstromschutzschalter integrieren. Insbesondere soll eine Einbindung in das Bussystem der European Installation Bus Association, EIB-Bus, ermöglicht werden. Derzeitige Hilfsschalter für Leitungsschutzschalter oder Fehlerstromschutzschalter sind für den Anschluß an Bussysteme ungeeignet. Die Schaltkontakte und die elektromechanischen Bauteile von Schaltschloß und Auslöseeinrichtung sind für eine digitale Signalabgabe nicht eingerichtet. Andererseits wären Zusatzeinrichtungen mit Leitungsverbindungen zwischen dem Schutzschalter und einer Anbaueinheit der Störsicherheit abträglich.

Darüber hinaus beeinträchtigt die in der Praxis bisher erforderliche Zuordnung von Hilfsschaltern und Fehlersignalschaltern zu einer Anbauseite des Schutzschalters und von Arbeitsstromauslösern für Fernauslösung zu einer anderen Anbauseite den weiteren Anbau eines Bausteins für Leitungsschutz bzw. für Schutz gegen Fehlerströme. Wenn das Grundgerät ein Leitungsschutzschalter ist, läßt sich also ein Anbauteil für Fehlerstromschutz bisher nicht anbauen, wenn Zusatzfunktionen der oben geschilderten Art anzubauen sind. Entsprechend ist die Situation, wenn man von einem Fehlerstromschutzschalter ausgeht und ein Anbauteil für Leitungsschutz vorsehen möchte.

Der Erfindung liegt die Aufgabe zugrunde, die geschilderten Schwierigkeiten zu vermeiden und eine Ankopplung an ein Bussystem zu ermöglichen.

Die Lösung der geschilderten Aufgabe erfolgt erfindungsgemäß durch ein Überwachungsgerät nach Patentanspruch 1. Bestimmte mechanische Zustände bei einem Leitungsschutzschalter oder Fehlerstromschutzschalter werden hierbei ohne mechanische Kopplung berührungslos durch das Gehäuse hindurch erfaßt. Vorteilhaft ist hierbei die Verschleißfreiheit und somit eine besonders geringe Störanfälligkeit, da berührungslose Sensoren, beispielsweise nach Art von BEROs, markante Bauteile in ihrer typischen Stellung überwachen können. Hierzu können Bauteile des Schaltschlosses oder der Auslöseeinrichtung überwacht werden oder auch etwa an diesen angebrachte zeigerartige Bauteile. Durch ohnehin erforderliche Auswerteelektronik zum Auswerten der berührungslos aufgenommenen Signale ist es durch Mehrfachnutzung von integrierten Schaltkreisbausteinen besonders wirtschaftlich, auch eine Busankopplung zur Anpassung an ein Bussystem und zur Übertragung in diesen unterzubringen.

Beim Überwachungsgerät können in einfacher Weise die Sensoren im anreihbaren Überwachungsgehäuse benachbart zur Anbauwand angeordnet werden. Im Überwachungsgehäuse kann zusätzlich eine Auslöseeinheit angeordnet sein, die mit Koppelelementen zum Einwirken auf das Schaltschloß anzureihender Schutzschalter, gegebenenfalls über deren Auslöseeinheit, versehen ist. Die Funktionselemente in einem derartigen Überwachungsgehäuse erlauben nicht nur eine Zustandserfassung, sondern auch eine Einwirkung aufgrund von Befehlen, die über Busleiter übermittelt werden, auf denen das Überwachungsgerät aufgesetzt ist. Beispielsweise können die Busleiter in der Tragschiene zum Aufsetzen von Schutzschaltern untergebracht werden, so daß Schutzschalter und Überwachungsgerät angereiht auf derselben Tragschiene aufgesetzt sind, wobei die Busankopplung Hierzu kann im Überwachungsgehäuse eine Platine mit einer Schaltung zur Busankopplung angeordnet sein.

Bei einem Überwachungsgehäuse für einen Fehlerstromschutzschalter kann die Auslöseeinheit im Überwachungsgerät lediglich als ein Elektromagnet ausgeführt sein, der mit Polschuhen in der Ausführung als Streufelderzeuger auf das Magnetsystem des Haltemagnetauslösers des Fehlerstromschutzschalters einwirkt. Bei geeigneter Positionierung und Bemessung des Elektromagneten kann das Magnetfeld des Haltemagnetauslösers bei Erregung des Elektromagneten so geschwächt werden, daß dessen Anker abfällt und der Fehlerstromschutzschalter auslöst.

Die Erfindung soll nun anhand von in der Zeichnung grob schematisch wiedergegebenen Ausführungsbeispielen näher erläutert werden:

In FIG 1 ist ein Überwachungsgerät zur Zustandserfassung in Schnittansicht veranschaulicht.

In FIG 2 ist ein Überwachungsgerät in der Art nach FIG 1, jedoch mit zusätzlicher Auslöseeinheit für einen Leitungsschutzschalter wiedergegeben.

In FIG 3 ist ein Überwachungsgerät mit einem Auslösemagneten für einen Fehlerstromschutzschalter dargestellt.

In den Figuren 4 bis 6 sind zwei Seitenansichten und die Aufsicht bezogen auf FIG 4 bei einem Auslösemagneten für ein Überwachungsgerät zum Auslösen des Haltemagneten in einem angereihten Fehlerstromschutzschalter beispielhaft wiedergegeben.

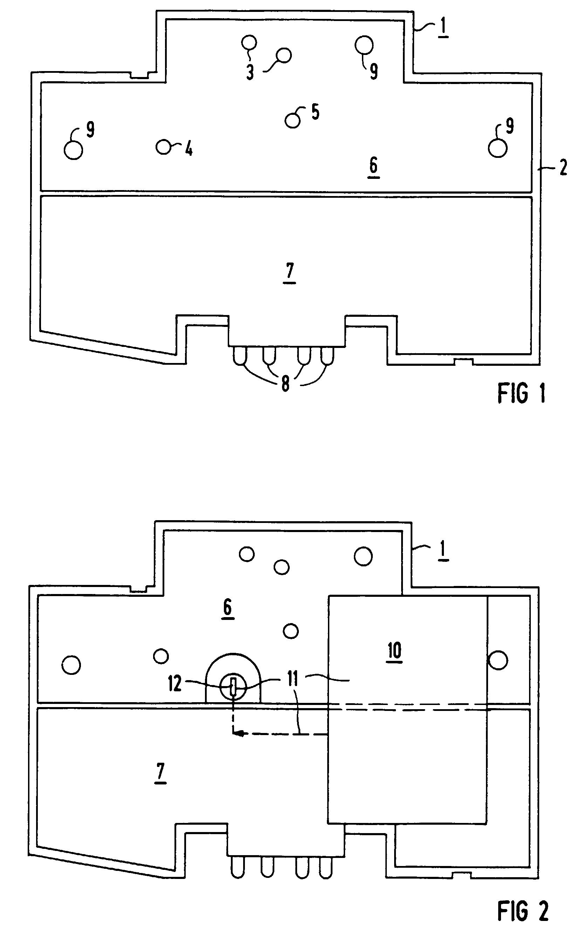

Das Überwachungsgerät 1 nach FIG 1 nimmt in seinem Überwachungsgehäuse 2 Sensoren 3 bis 5 auf, und zwar Sensoren 3 für die Griffstellung eines anzureihenden Schutzschalters, einen Sensor 4 für die Ankerstellung und einen Sensor 5 für die Kontaktstellung auf. Die Sensoren können nach dem BERO-Prinzip ausgeführt sein. Die Sensoren 3 bis 5 und eine werteschaltung sind auf einer Platine 6 für Überwachung angeordnet. Verständlicherweise richtet sich die Anordnung der Sensoren nach dem konstruktiven Aufbau eines anzureihenden und zu überwachenden Schutzschalters. Im unteren Bereich ist eine Platine 7 mit einer Schaltung zur Busankopplung angeordnet. Der Kontakt zu Busleitern erfolgt über Kontaktstifte 8.

Um die Platine 6 für die Überwachung exakt zu positionieren, kann es vorteilhaft sein, Zentrierstifte 9 vorzusehen. Die Aufnehmer bzw. Sensoren 3 bis 5 sind dann für das zum Überwachen zugeordnete Gerät exakt positioniert.

Um die Anbaufunktion "Arbeitsstromauslöser" zu realisieren, sind im Überwachungsgerät 1 nach FIG 2 eine Auslöseeinheit 10, im wesentlichen ein Auslösemagnet, und eine zugeordnete Mitnehmermechanik 11 vorgesehen. Die Mitnehmermechanik 11 kann mit einem das Überwachungsgehäuse durchgreifenden Finger 12 auf die Mechanik des Schaltschlosses oder des Auslösers eines anzureihenden Leitungsschutzschalters einwirken.

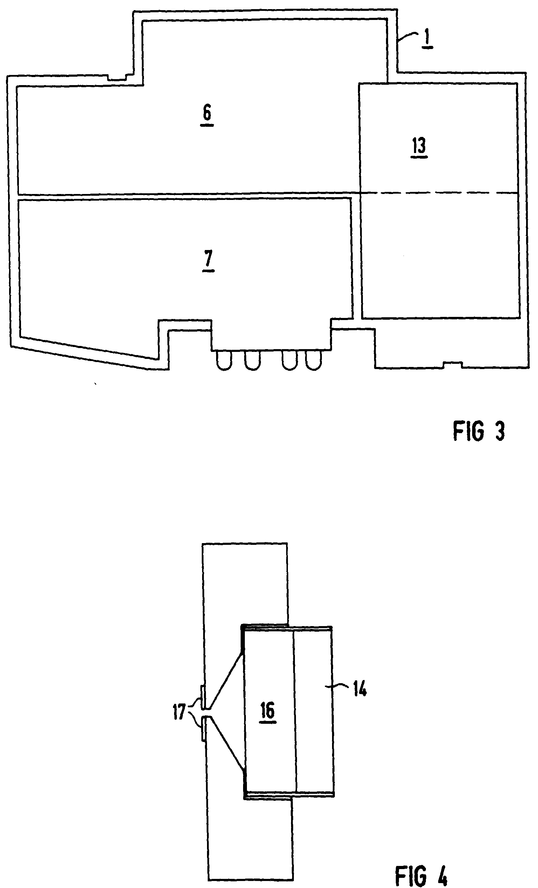

Ein Arbeitsstromauslöser für einen anzureihenden Fehlerstromschutzschalter ist im Überwachungsgerät 1 nach FIG 3 besonders einfach und störungsfrei ausgeführt. Ein Auslösemagnet 13 ist durch Anordnung und Feldführung dafür eingerichtet, das Magnetfeld eines Haltemagnetauslösers in einem anzureihenden Fehlerstromschutzschalter bei Erregung des Auslösemagneten 13 gezielt zu schwächen, so daß der Haltemagnetauslöser anspricht.

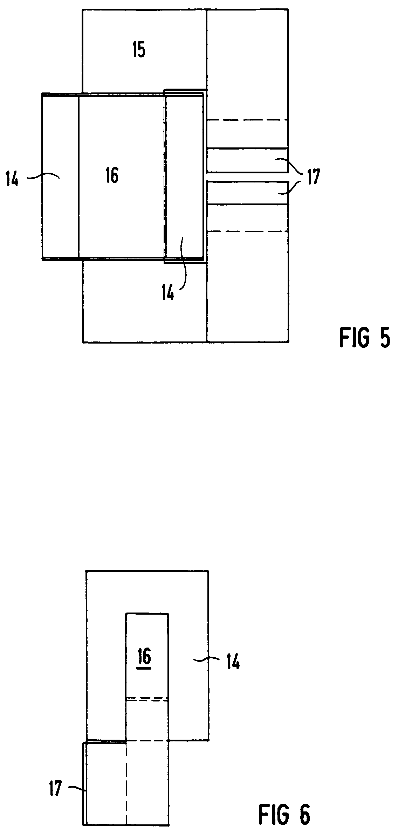

Ein derartiger Auslösemagnet 13 kann beispielsweise so ausgeführt sein, wie es in den Figuren 4 bis 6 veranschaulicht ist. Eine Magnetfeldspule 14 ist um eine gedachte Achse 15 ringförmig und flachgedrückt angeordnet. In einem Magnetsystem greift ein Kern 16 als Teil eines Ringkerns ein, der zu Polschuhen 17 führt. Die Polschuhe 17 sind vorteilhafterweise so gestaltet, daß sie ein Streufeld zu einer benachbarten Ebene abgeben, in der der Haltemagnetauslöser eines anzureihenden und zu überwachenden stromschutzschalters positioniert ist. Die Ansteuerung der Erregung für die Magnetfeldspule 14 kann über einen Bus oder über separate Klemmen für eine externe Einrichtung erfolgen. In beiden Fällen ist die vollständige galvanische und mechanische Trennung von Überwachungsgerät und überwachtem Gerät vorteilhaft.

## Patentansprüche

1. Überwachungsgerät zur Zustandserfassung bei elektromechanischen Schutzschaltern, mit Schaltschloß, Schaltkontakten und Auslöseeinrichtung,
**dadurch gekennzeichnet**,
daß in einem zu Schutzschaltern anreihbaren Überwachungsgehäuse (2) in einem schmalen Raum in seinem oberen Bereich eine mit berührungslosen Sensoren (3, 4, 5) und einer Auswerteschaltung bestückte Platine (6) und in seinem unteren Bereich eine Platine (7) mit einer Schaltung zur Busankopplung angeordnet ist, wobei das Überwachungsgehäuse (2) das Profil von Schutzschaltern aufweist und Halterungen zum Aufschnappen auf eine Tragschiene ausgebildet sind.

2. Überwachungsgerät nach Anspruch 1,
dadurch gekennzeichnet,
daß die Sensoren (3, 4, 5) im Überwachunsgehäuse (2) benachbart zur Anbauwand für einen Schutzschalter angeordnet sind.

3. Überwachungsgerät nach Anspruch 1 oder 2,
**dadurch gekennzeichnet**,
daß im Überwachungsgehäuse (2) zusätzlich eine Auslöseeinheit (10) angeordnet ist, die mit Koppelelementen (Mitnehmermechanik 11, Durchgriffsfinger 12) zum Einwirken auf das Schaltschloß anzureihender Schutzschalter, gegebenenfalls über deren Auslöseeinheit, versehen ist.

4. Überwachungsgerät nach Anspruch 3,
**dadurch gekennzeichnet**,
daß bei einem Überwachungsgehäuse (2) für einen Fehlerstromschutzschalter die Auslöseeinheit (10) lediglich ein Elektromagnet mit Polschuhen (17) in der Ausführung als Streufelderzeuger ist.

## Claims

1. Monitoring device for sensing the condition of electromechanical circuit breakers having a breaker mechanism, main contacts and a tripping device, **characterised in that**, in a monitoring housing (2) which can be added on to circuit breakers, in a narrow space in its upper region there is arranged a printed circuit board (6) fitted with non-contact sensors (3, 4, 5) and an evaluation circuit and in its lower region there is arranged a printed circuit board (7) with a circuit for the bus coupling, wherein the monitoring housing (2) has the profile of circuit breakers and supports are formed for clipping on to a mounting rail.

2. Monitoring device according to claim 1, **characterised in that** the sensors (3, 4, 5) are arranged in the monitoring housing (2) adjacent to the mounting wall for a circuit breaker.

3. Monitoring device according to claim 1 or 2, **characterised in that** in the monitoring housing (2) there is additionally arranged a tripping unit (10) which is provided with coupling elements (mechanical driving system 11, penetrating finger 12) for acting upon the breaker mechanism of add-on circuit breakers, possibly by way of their tripping unit.

4. Monitoring device according to claim 3, **characterised in that**, in a monitoring housing (2) for a residual-current-operated circuit breaker, in the embodiment as a stray field generator the tripping unit (10) is simply an electromagnet with pole shoes (17).

## Revendications

1. Dispositif de surveillance pour la détection d'état de disjoncteurs électromécaniques, comportant un verrou de maintien, des contacts de commutation et un dispositif de déclenchement, caractérisé en ce qu'une platine (6) équipée de détecteurs (3, 4, 5) sans contact et d'un circuit d'évaluation est disposée dans un boîtier de surveillance (2) pouvant être ajouté à des disjoncteurs, dans un espace étroit de sa partie supérieure, et, dans sa partie inférieure, est disposée une platine (7) équipée d'un circuit de couplage de bus, le boîtier de surveillance (2) ayant le profil de disjoncteurs et des fixations de verrouillage par ressort sur un rail de support étant prévues.

2. Dispositif de surveillance selon la revendication 1, caractérisé en ce que les détecteurs (3, 4, 5) sont disposés dans le boîtier de surveillance (2) à proximité de la paroi rapportée d'un disjoncteur.

3. Dispositif de surveillance selon la revendication 1 ou 2, caractérisé en ce qu'une unité de déclenchement (10) est disposée en outre dans le boîtier de surveillance (2), laquelle est pourvue d'éléments de couplage (mécanisme d'entraînement 11, doigt de pénétration 12) destinés à agir sur le verrou de maintien de disjoncteurs à ajouter, le cas échéant par l'intermédiaire de leur unité de déclenchement.

4. Dispositif de surveillance selon la revendication 3, caractérisé en ce que dans un boîtier de surveillance (2) pour un disjoncteur par courant de défaut, l'unité de déclenchement est simplement un électro-aimant avec des épanouissements polaires (17) réalisés sous forme de générateurs de champs de dispersion.
